# EUROPEAN PATENT APPLICATION

(11) **EP 4 817 384 A1**
(43) Date of publication of application: **07.10.2026**
(21) Application number: 25167388.5
(22) Date of filing: 31.03.2025
(51) Int. Cl.: A01B 73/00, A01B 73/04

(54) **AN AGRICULTURAL MACHINE AND A METHOD OF OPERATING AN AGRICULTURAL MACHINE**

(71) Applicant: Kverneland Group Les Landes Genusson S.A.S., 85130 Les Landes Genusson (FR)
(72) Inventor: Poulard, Janny, 85130 Les Landes-Genusson (FR); Pasquier, Gaëtan, 85130 Les Landes-Genusson (FR); Talneau, Jean-Baptiste, 85130 Les Landes-Genusson (FR)
(74) Representative: Bittner, Thomas L.

(57) **Abstract**

The present disclosure refers to an agricultural machine and method of operating an agricultural machine, the agricultural machine comprising: a first frame member (2); a second frame member (4) which is, with respect to the first frame member (2), movable between a first frame position and a second frame position; a linear actuator (7), the linear actuator (7) being extractable and retractable for adjusting an actuator extension of the linear actuator (7), and being pivotably connected to the first frame member (2) in a first pivot point. For moving the second frame member (4) between the first frame position and the second frame position, the linear actuator (7) is operable to move the linear actuator (7) from a start position to a intermediate position, and move the linear actuator (7) from the intermediate position to an end position. A support actuator (9) is provided which is operable to apply a support force supporting a first pivoting motion of the linear actuator (7) in at least a curve section of a movement curve representing the first pivoting motion of the linear actuator (7) around the first pivot point (8a) between the start pivot position and the end pivot position, wherein the intermediate pivot position is located within the curve section. (Fig. 3)

## Description

The present application refers to an agricultural machine, and a method of operating an agricultural machine.

### Background

With respect to agricultural machines of different type, there may be need for moving a first frame member of the agricultural machine relative to a second frame member of the agricultural machine. For example, the second frame member may be relocated between a first frame position which may be a working position and a second frame position which may be a non-working position by such movement. The movement may be a rotational or pivoting movement.

For conducting such movement of the second frame member with respect to the first frame member, a linear actuator may be provided which is retractable and extractable for causing movement of the frame member. Relocation of the second frame member between the first frame position and the second frame position can be achieved by retracting or extracting the linear actuator. In case the process of movement comprises the linear actuator being retracted in a first part of the movement and being extracted in a following second part of the movement, operation of the linear actuator has to be reversed between two modes of operation, i.e. retraction and extraction. It has been found that such kind of movement may be instable, especially in the point of reversing operation of the linear actuator.

### Summary

It is an object to provide an agricultural machine and a method of operating an agricultural machine supporting reliable and safe movement of frame members of the agricultural machine.

For solving the object, an agricultural machine and a method of operating an agricultural machine according to the independent claims 1 and 13, respectively, are provided. Additional aspects are disclosed in the depended claims.

According to one aspect, an agricultural machine is provided, the machine comprising: a first frame member; a second frame member which is, with respect to the first frame member, movable between a first frame position and a second frame position; and a linear actuator, the linear actuator being extractable and retractable for adjusting an actuator extension of the linear actuator, and being pivotably connected to the first frame member in a first pivot point. For moving the second frame member between the first frame position and the second frame position, the linear actuator is operable to move the linear actuator from a start position to an intermediate position, and move the linear actuator from the intermediate position to an end position, wherein the linear actuator has a first actuator extension in the start position, a second actuator extension different from the first actuator extension in the middle position, and a third actuator extension different from the second actuator extension in the end position. The linear actuator is in a start pivot position when the linear actuator is in the start position. The linear actuator is in an intermediate pivot position when the linear actuator is in the intermediate position, wherein the intermediate pivot position is different from the start pivot position. The linear actuator is in an end pivot position when the linear actuator is in the end position, wherein the end pivot position is different from both the start pivot position and the intermediate pivot position. The machine is further comprising a support actuator operable to apply a support force supporting a first pivoting motion of the linear actuator in at least a curve section of a movement curve representing the first pivoting motion of the linear actuator around the first pivot point between the start pivot position and the end pivot position, wherein the intermediate pivot position is located within the curve section.

According to another aspect, a method of operating an agricultural machine is provided. The method comprises providing an agricultural machine which is having a first frame member; a second frame member which is, with respect to the first frame member, movable between a first frame position and a second frame position; a linear actuator, the linear actuator being extractable and retractable for adjusting an actuator extension of the linear actuator, and being pivotably connected to the first frame member in a first pivot point; and a support actuator. The method further comprises moving the second frame member between the first frame position and the second frame position, comprising: moving the linear actuator from a start position to an intermediate position, and moving the linear actuator from the intermediate position to an end position, wherein the linear actuator has a first actuator extension in the start position, a second actuator extension different from the first actuator extension in the middle position, and a third actuator extension different from the second actuator extension in the end position; providing the linear actuator in a start pivot position when the linear actuator is in the start position; providing the linear actuator in an intermediate pivot position when the linear actuator is in the intermediate position, wherein the intermediate pivot position is different from the start pivot position; and providing the linear actuator in an end pivot position when the linear actuator is in the end position, wherein the end pivot position is different from both the start pivot position and the intermediate pivot position. Further, the support actuator is applying a support force supporting a first pivoting motion of the linear actuator in at least a curve section of a movement curve representing the first pivoting motion of the linear actuator between the start pivot position and the end pivot position around the first pivot point, wherein the intermediate pivot position is located within the curve section.

For safe and reliable operation of movement of the second frame member between the first frame position and the second frame position by means of the linear actuator the support actuator is provided which may also be referred to as assisting actuator. The linear actuator is extractable and retractable for adjusting its actuator extension. The support actuator is operable to provide and apply a support force which is supporting the linear actuator's first pivoting motion at least in the curve section which is comprising the intermediate pivot position which is an intermediate position of the linear actuator having the second actuator extension. The second actuator extension is different from both the first actuator extension and the third actuator extension provided for the linear actuator in the start position and the end position, respectively. At some point of the curve section in which the support force is applied operation of the linear actuator may reversed from retracting to extracting or from extracting to retracting. Thus, the support actuator being operable to apply the support force in at least the curve section will ensure safe and reliable movement of the second frame member between the first and second frame position, specifically in the part of the movement curve representing the first pivoting motion of the linear actuator in which operation of the linear actuator is reversed.

The first frame member may be in a fixed position when the second frame member is moved between the first and second frame position. In different embodiments there is relative movement between the first and second frame member.

The linear actuator may have the same actuator extension when provided in the start position and the end position. Alternatively, the linear actuator may be provided with different linear actuator extension when provided in the start position and the end position, respectively.

In some embodiments the pivotal movement of the linear actuator may be a continuous movement comprising pivoting the linear actuator continuously between the start pivot position and the end pivot position.

The curve section may be extending between a pre-intermediate pivot position located before the intermediate pivot position and a post-intermediate pivot position located behind the intermediate pivot position, and both the pre-intermediate pivot and the post-intermediate pivot position may be located adjacent to the intermediate pivot position. In such example, the curve section can be limited to a part of the movement or motion curve adjacent to the intermediate pivot position on both sides.

It may be provided that the linear actuator is operable to retract or extract between the pre-intermediate pivot position and the intermediate pivot position and to extract or retract between the intermediate pivot position and the post-intermediate pivot position. The pre-intermediate pivot position being provided adjacent to the intermediate position is different from the start pivot position. Thus, the linear actuator has been pivoted from the start pivot position before reaching the pre-intermediate pivot position. Similarly, the post-intermediate pivot position is different from the end pivot position.

The agricultural machine may further comprise an operation control device assigned to the linear actuator, wherein the operation control device is operable to control operation of the linear actuator in a first mode of operation for extracting the linear actuator and a second mode of operation for retracting the linear actuator, and to reverse operation of the linear actuator between the first mode of operation and the second mode of operation. For example, the operation control device may comprise a hydraulic reversing valve operable to reverse flow of hydraulic fluid for reversing operation of the linear actuator. Different type of reversing valve is known as such.

The agricultural machine may further comprise a sensor device operatively connected to the operation control device and operable to detect one or more positions from the following group of positions: at least one of the intermediate pivot position, the pre-intermediate pivot position, the post-intermediate pivot position, the start pivot position, and the end pivot position of the linear actuator; at least one of the start position, the intermediate position, and the end position of the linear actuator; and at least one of the first frame position and the second frame position of the second frame member. The sensor device may comprise one or more sensors. A first sensor may be assigned to the linear actuator and may be operable to detect alt least one of different position of the linear actuator and different extension of the linear actuator. A second sensor may be assigned to the second frame member and may be operable to detect different positions of the second frame member. The one or more sensors may be operable to detect at least one of a pivot position, and a linear movement position. The sensor may be operable to detect at least one of a linear extension and an angle of rotation.

The support actuator may be one of a support linear actuator and a support rotary actuator.

For the support linear actuator, one of the following is provided: (a) for moving the second frame member between the first frame position and the second frame position, the linear actuator is operable to retract the linear actuator from an extracted start position to a retracted intermediate position, and to extract the linear actuator from the retracted intermediate position to an extracted end position; and (b) for moving the second frame member between the first frame position and the second frame position, the linear actuator is operable to extract the linear actuator from a retracted start position to an extracted intermediate position, and to retract the linear actuator from the extracted intermediate position to a retracted end position.

In some embodiment, the support linear actuator may be operable to provide and apply a support force which is supporting the linear actuator's first pivoting motion of at least in the curve section which is comprising the intermediate pivot position which is a retracted or extracted position of the linear actuator. Contrary, the linear actuator is in extracted or retracted position in the start pivot position and the end pivot position. At some point of the curve section in which the support force is applied operation of the linear actuator is reversed from retracting to extracting or from extracting to retracting. Thus, the support linear actuator being operable to apply the support force in at least the curve section will ensure safe and reliable movement of the second frame member between the first and second frame position, specifically in the part of the movement curve representing the first pivoting motion of the linear actuator in which operation of the linear actuator is reversed.

In an example, the linear actuator may be operable to retract or extract between the extracted / retracted start position and the retracted / extracted intermediate position (intermediate pivot position) and, following, to extract / retract from the retracted / extracted intermediate position to the extracted / retracted end position. Operation of the linear actuator may be reversed in the intermediate pivot position.

With respect to the agricultural machine, at least one of the following may be provided: the linear actuator is in a fully retracted / extracted position when the linear actuator is in the intermediate pivot position; the linear actuator is in a fully extracted / retracted position when the linear actuator is in the start pivot position; and the linear actuator is in the fully retracted / extracted position when the linear actuator is in the end pivot position.

The sensor device may be operable to detect at least one of the fully retracted position, and the fully extracted position of the linear actuator. For example, operation of the linear actuator may be reversed in response to the sensor device detecting the fully retracted or the fully extracted position of the linear actuator. Alternatively or in addition, the sensor device may be operable to detect one or more pivot positions of the linear actuator and to reverse operation of the linear actuator in response to detecting one or more pivot positions.

In addition or alternatively, if the support actuator is provided by support linear actuator, at least one of the following may be provided for the agricultural machine: the support linear actuator is in a fully retracted / extracted position when the second frame member is in one of the first frame position and the second frame position; and the support linear actuator is in a fully extracted / retracted position when the second frame member is in one of the second frame position and the first frame position. The sensor device may be operable to detect at least one of the fully extracted position of the support linear actuator and the fully retracted position of the support linear actuator.

The linear actuator may be pivotably connected to the second frame member in a second pivot point. With respect to the second pivot point, the linear actuator may be moved to different pivot positions while the linear actuator is operated for moving the second frame member between the first frame position and the second frame position. In such example, the linear actuator may be pivotably connected in opposite end sections of the linear actuator.

The second frame member may be pivotably connected to the first frame member in a frame member pivot point, wherein the second frame member is movable between the first frame position and the second frame position by a second pivoting motion or movement around the frame member pivot point. In such example, relocation or movement of the second frame member with respect to the first frame member between the first and second frame position may be conducted by the second pivoting motion of the second frame member.

The linear actuator, with respect to the first pivot point, may be pivotable mono-directional between the start pivot position and the end pivot position by the first pivoting motion. Mono-directional movement may be accomplished by continuing a direction of pivoting motion conducted before reaching the intermediate pivot position in the following movement of the linear actuator after the intermediate pivot position.

The first frame position may be a working position of the second frame member, and the second frame position may be a non-working position of the second frame member. One of the working position and the non-working position may be a transport position of the second frame member. Having the second frame member provided in one of the working position and the non-working position may provide the agricultural machine such as an implement in a working position. The agricultural machine may be in a working position if the second frame member is in the non-working position.

In different embodiments, the second frame member may be carrying or holding at least one of the following: one or more working tools, and one or more wheels. In case the second frame member is holding wheels it may provide for a wheel wagon. In this embodiment, having the second frame member (i.e. the wheel wagon) in the working position which, for example, may be a lowered position, may place the agricultural machine such as an implement in the non-working position in which earth working tools may be raised from the ground. Similarly, having the second frame member (i.e. the wheel wagon) in the non-working position, for example, a lifted position, may place the agricultural machine such as the implement in the working position.

In an embodiment it may be provided that the second frame member is in a position proximal with respect to a main frame of the agricultural machine in the first frame position. In the second frame position the second frame member may be in a position distal with respect to the main frame of the agricultural machine. For example, in such embodiment one or more wheels and / or one or more working tools received on the second frame member may be relocated or moved between the working position (distal position) and the non-working position (proximal position).

The agricultural machine may be selected from the following group: soil preparation machine, soil tillage machine, weeding machine, harrows, hoes, plough, seeder, sprayer, harvester, and plant cutting machine such as mower, rakes, tedder, mergers, baling machines, wrapping machines, handling machines, loaders, trailers, harvesters.

At least one of the linear actuator and the support actuator may be selected from the following group of linear actuators: hydraulic actuator, electric actuator, magnetic actuator, and pneumatic actuator. In case of hydraulic or pneumatic actuator, the linear actuator and the support actuator may be connected to a common supply system or a common supply line for receiving pressurized fluid for operating the actuator to retract and extract. The control device may comprise a reverse valve assigned to the linear actuator, wherein the reverse valve is operable to reverse a flow direction of pressurized fluid.

At least one of the following may be provided: if the second frame member is in the first frame position, a longitudinal axis of the support actuator is parallel to a line connecting the second pivot point and the frame member pivot point; and, if the second frame member is in the second frame position, the longitudinal axis of the support actuator is oriented parallel to the line connecting the first pivot point and the frame member pivot point.

With respect to the agricultural machine, at least one of the following may be provided: the support actuator is pivotably connected to the first frame member for applying the support force; and the support actuator is pivotably connected to at least one of the second frame member and the linear actuator for applying the support force. Another pivot point in which the support actuator is pivotably connected to the first frame member may be located on a lower level of height than the first pivot point along a vertical direction.

One of the following may be provided for the agricultural machine: the support actuator is operable to retract when the linear actuator is moved by the first pivoting motion along a first sub-curve section of the curve section; and the support actuator is operable to extract when the linear actuator is moved by the first pivoting motion along a second sub-curve section of the curve section. The curve section may be the sum of the first and the second sub-curve section, i.e. the first sub-curve section and the second sub-curve section together are forming the curve section. The first sub-curve section may be extending between the pre-intermediate pivot position and the intermediate pivot position. The second sub-curve section may be extending between the intermediate pivot position and the post-intermediate pivot position.

With respect to the method of operating the agricultural machine, the different embodiments disclosed for the agricultural machine may apply mutatis mutandis.

In an embodiment, the first frame member may be a main frame, and the second frame member may be a sub-frame of the agricultural machine.

In some embodiment, an additional linear actuator may be provided, wherein the additional linear actuator is operable to move, together with the linear actuator, the second frame member between the first and second frame position. With respect to the additional linear actuator, different embodiments may be applied as disclosed for the linear actuator.

An additional support actuator may be provided in some embodiments, the additional support actuator being assigned to one of the linear actuator and the additional linear actuator and being operable to provide or apply an additional support force supporting pivoting motion of the linear actuator and / or the additional linear actuator in at least the curve section. With respect to the additional support actuator, different embodiments may be applied as disclosed for the support actuator. For example, the additional support actuator may be one of a support linear actuator and a support rotary actuator.

### Description of embodiments

Following, further embodiments are described by referring to figures. The figures, show:
- Fig. 1: a schematic representation of an agricultural cultivator, wherein a wheel wagon is lifted into a non-working position;
- Fig. 2: a schematic representation of the agricultural cultivator of Fig. 1, wherein the wheel wagon is lowered into a working position;
- Fig. 3: a schematic representation of an arrangement of the agricultural cultivator of Fig. 1, wherein a second frame member is in a first frame position relative to a first frame member;
- Fig. 4: a schematic representation of the arrangement of Fig. 3, wherein the second frame member is in intermediate position relative to the first frame member;
- Fig. 5: a schematic representation of the arrangement of Fig. 3, wherein the second frame member is in a second frame position relative to the first frame member;
- Fig. 6: a schematic representation of a curve of movement of a pivoting motion of a linear actuator;
- Fig. 7: a schematic representation of a linear actuator, a support actuator, and an operation control device, wherein a first mode of operation is depicted;
- Fig. 8: a schematic representation of the arrangement of Fig. 7, wherein the second mode of operation is depicted;
- Fig. 9: a schematic representation of another agricultural cultivator, wherein a wheel wagon is lifted into a non-working position;
- Fig. 10: a schematic representation of the other agricultural cultivator of Fig. 9, wherein the wheel wagon is lowered into a working position;
- Fig. 11: a schematic representation of an arrangement of the other agricultural cultivator of Fig. 9, wherein a second frame member is in a first frame position relative to a first frame member;
- Fig. 12: a schematic representation of the arrangement of Fig. 11, wherein the second frame member is in intermediate position relative to the first frame member;
- Fig. 13: a schematic representation of the arrangement of Fig. 11, wherein the second frame member is in a second frame position relative to the first frame member; and
- Fig. 14: a schematic representation of a further agricultural cultivator, wherein a wheel wagon is lifted into a non-working position.

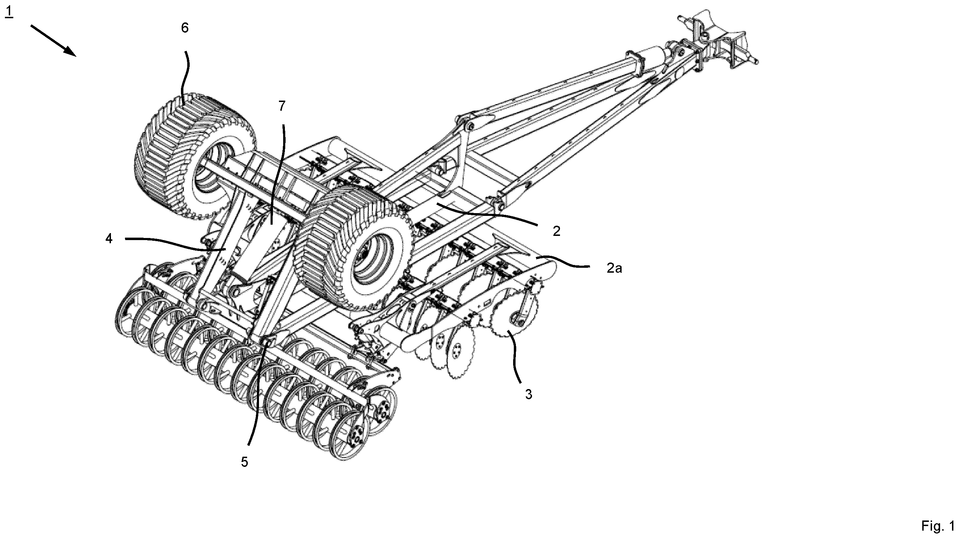

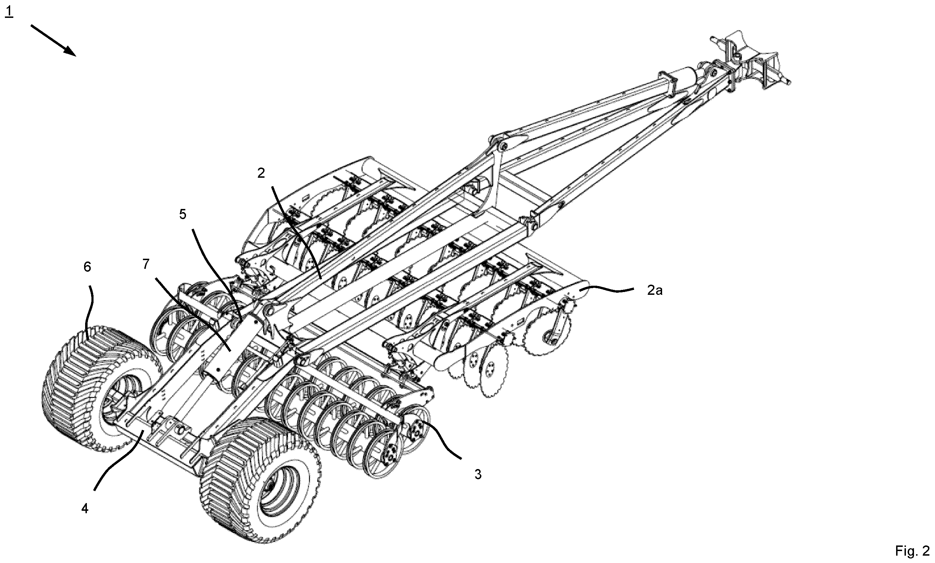

Referring to Fig. 1 and 2, an agricultural machine 1 is depicted which is an agricultural cultivator. The agricultural machine 1 comprises a first frame member 2 which may also be referred to as main frame. A plurality of working tools 3 is provided with the agricultural machine 1, wherein the plurality of working tools 3 is operable for soil preparation and / or tillage in the example depicted. The working tools 3 may be held or carried by at least one of the first frame member 2 and one or more sub-frame members 2a connected to the first frame member 2.

A second frame member 4 is pivotably connected to the first frame member 2 in a frame member pivot point 5. The second frame member 4 may be part of the main frame or one of the sub-frame members 2a.

Wheels 6 are received on or hold by the second frame member 4, thereby, providing a wheel wagon of the agricultural machine 1. The second frame member 4 carrying the wheels 6 is movable by pivoting motion between a first frame position which may be referred to as non-working position (see Fig. 1) and a second frame position which may be referred to as working position (see Fig. 2). In the second frame position (working position) the wheels 6 are lowered to the ground. In such position the agricultural machine 1 is operable for transport (working position = transport position), for example, transport on a street.

Having the second frame member 4 pivoted into the (lifted) non-working position (see Fig. 1) will place the agricultural machine 1 in a working position for earth working. Placing the second frame member 4 pivoted in the (lowered) working position (see Fig. 2) will provide for a non-working position of the agricultural machine 1 in which the working tools 3 are raised from the ground.

For moving or relocating the second frame member 4 between the first frame position and the second frame position shown in Fig. 1 and 2, respectively, a linear actuator 7 is operated.

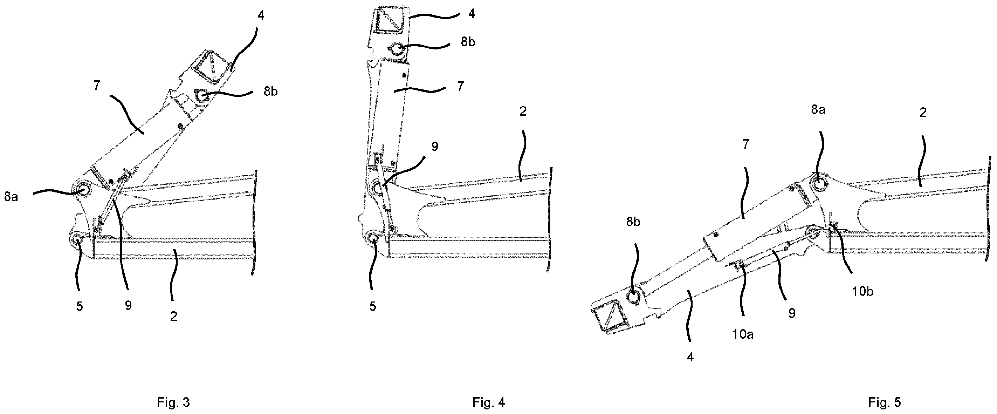

Fig. 3 to 5 show schematic representations of the arrangement of the first frame member 2, the second frame member 4 pivotably connected to the first frame member 2 in the frame member pivot point 5, and the linear actuator 7 operable for moving the second frame member 4 holding the wheels 6 between the different positions shown in Fig. 1 and 2. Fig. 3 is representing the situation depicted in Fig. 1. Fig. 5 is representing the situation shown in Fig. 2, wherein the second frame member 4 is in the lowered position.

Referring to Fig. 3, the second frame member 4 is in the first frame position with respect to the first frame member 2. The linear actuator 7 is in a partially extracted start position. In an alternative embodiment (not shown), the linear actuator 7 may be provided in a fully extracted start position. Also, the support actuator 9 is in a start pivot position.

For moving the second frame member 4 by pivoting motion around the frame member pivot point 5 to the second frame position depicted in Fig. 5, the linear actuator 7 is operated, i.e. the linear actuator 7 is moved to an intermediate (retracted) position shown in Fig. 4, which is a fully retracted position of the linear actuator 7 in the example shown. In an alternative embodiment (not shown), the linear actuator 7 may be moved to a partially retracted position. At the same time, the linear actuator 7 is moved into an intermediate pivot position shown in Fig. 4.

Further rotational or pivoting motion of the second frame member 4 is caused by further operation of the linear actuator 7 which is moved to the (fully or partially) extracted position shown in Fig. 5. At the same time, the linear actuator 7 is pivoted from the intermediate pivot position in Fig. 4 into an end pivot position shown in Fig. 5.

Both the second frame member 4 and the linear actuator 7 are rotated or pivoted when the second frame member 4 is moved from the first frame position in Fig. 3 to the second member position in Fig. 5. The linear actuator 7 is rotated around a first pivot point 8a in which the linear actuator 7 is pivotably connected to the first frame member 2. Further, the linear actuator 7 is also rotated around a second pivot point 8b in which the linear actuator 7 is pivotably connected to the second frame member 4.

For assisting or supporting pivotal movement of the second frame member 4, specifically in and adjacent to the pivot position shown in Fig. 4, a support actuator 9 is provided which is pivotably connected to the first frame member 2 and the linear actuator 7 in additional pivot points 10a, 10b. In the example shown in Fig. 1 to 5, the support actuator 9 is provided as a support linear actuator.

In the embodiment shown in Fig. 3 to 5, the support actuator 9 is conducting mono-directional extraction while the second frame member 4 is moved from the first frame position in Fig. 3 to the second frame position in Fig. 5. Such extraction provides for a supporting force supporting rotational movement of the linear actuator 7 which is acting for pivoting motion of the second frame member 4 around the frame member pivot point 5. Similarly, the supporting force may be provided by the support actuator 9 when the second frame member 4, by means of operating the linear actuator 7, is moved back from the second frame position (see Fig. 5) to the first frame position (see Fig. 3).

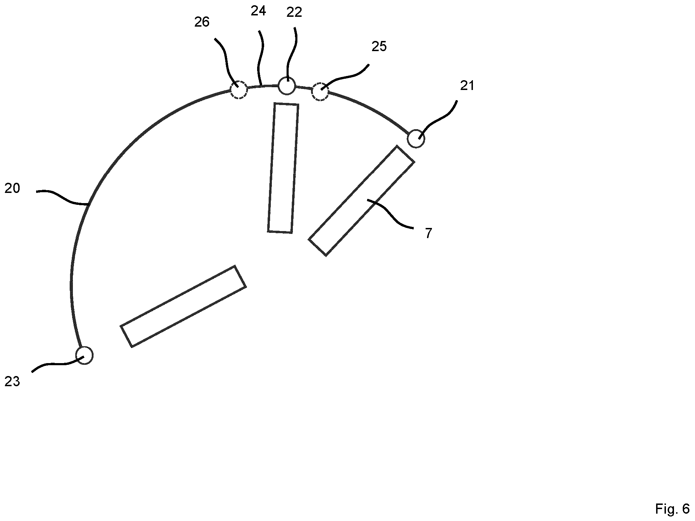

Fig. 6 shows a schematic representation of a curve of movement 20 of a pivoting motion conducted by the linear actuator 7 for moving the second frame member 4 between the first and the second frame position. Along the curve of movement 20 the linear actuator 7 is rotated from the start pivoting position 21 to the intermediate position 22, and, following, to the end pivoting position 23. The intermediate position 22 is located with a curve section 24 of the curve of movement 20. In the example depicted, the curve section 24 is extending between a pre-intermediate pivot position 25 and a post-intermediate position 26. The support actuator 9 may be operable to apply the support force to the linear actuator 7 at least within the curve section 24 for stable and safe pivoting motion.

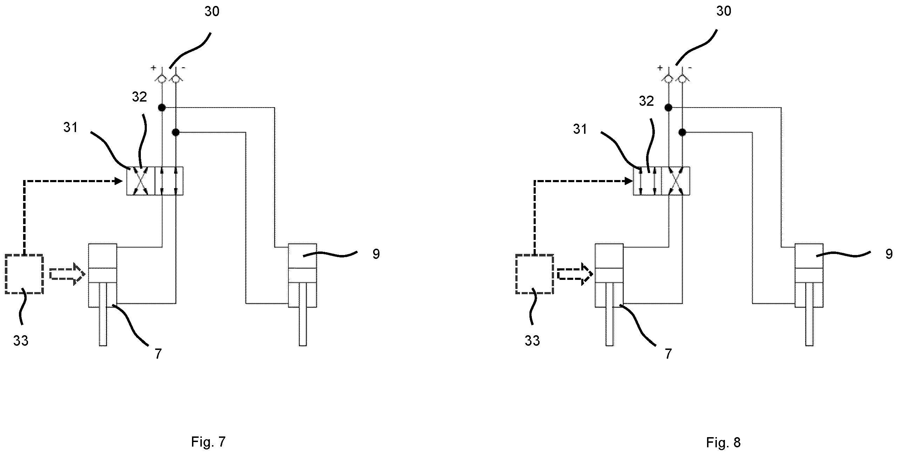

Fig. 7 and 8 show a schematic representation of an embodiment in which the linear actuator 7 and the support actuator 9 are connected to a fluid supply line 30 supplying both the linear actuator 7 and the support actuator 9 with a pressurized fluid for extending and retracting. An operation control device 31 is provided which comprises a reversing valve 32 which is operated for switching operation of the linear actuator 7 between a first mode of operation (extracting) and a second mode of operation (retracting) during movement of the second frame member 4 between the first and the second frame member position.

A sensor device 33 may be provided for detecting one or more positions of the linear actuator 7, for example, different pivot positions in the course of relocating the second frame member 4 between the first and the second frame member position.

Operation of the operation control device 31 can be controlled in response to sensor signals detected by the sensor device 33. For example, the sensor device 33 may detect a pivot position of one of the linear actuator 7 and / or a pivot position of the second frame member 4 shown in Fig. 4. In response to detecting such position, the operation control device 31 may reverse operation mode of the linear actuator 7 for switching between retraction and extraction.

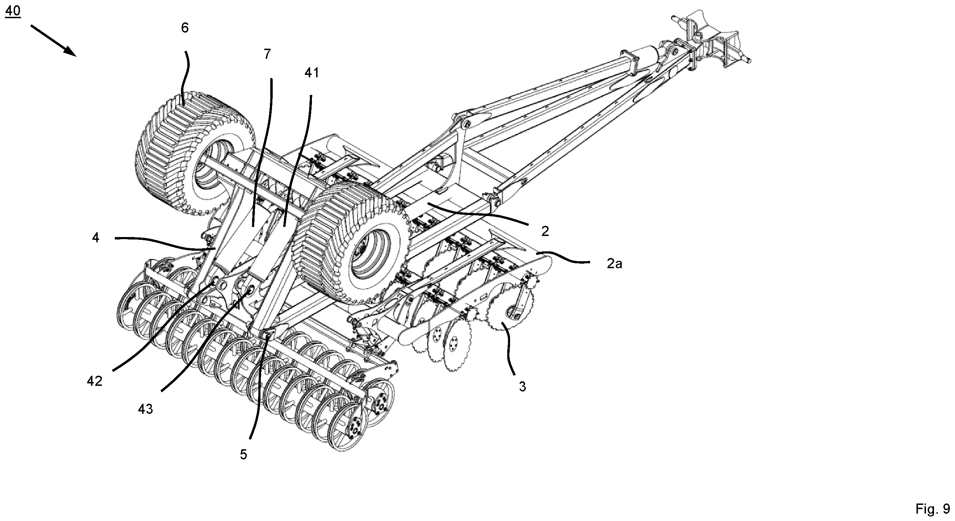

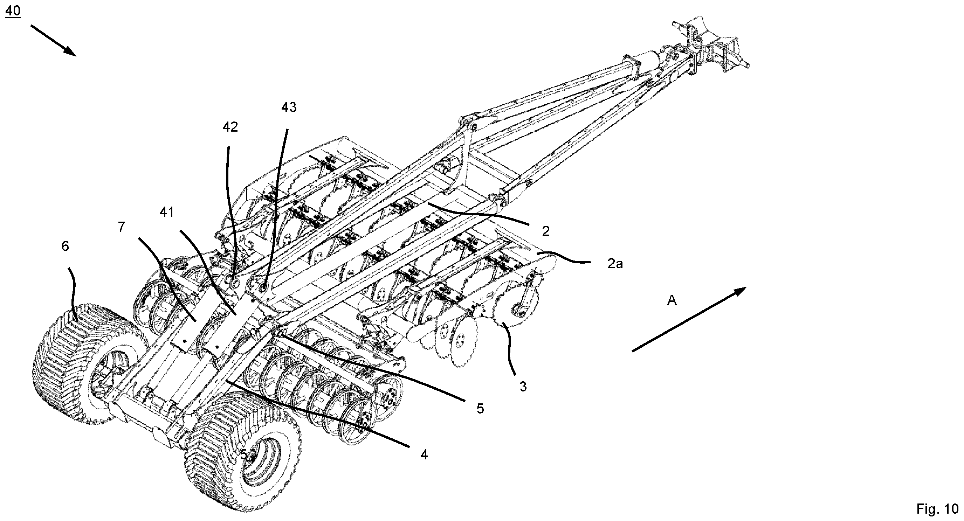

Fig. 9 and 10 show an embodiment of another agricultural machine 40 which, in this example, is an agricultural cultivator. In Fig. 9 and 10, the same features are assigned the same reference numerals like in Fig. 1 to 3.

Having the second frame member 4 pivoted into the (lifted) non-working position (see Fig. 9) will place the other agricultural machine 40 in a working position for earth working. Placing the second frame member 4 pivoted in the (lowered) working position (see Fig. 10) will provide for a non-working position of the other agricultural machine 40 in which the working tools 3 are raised from the ground.

For moving the second frame member 4 by pivoting motion around the frame member pivot point 5 to different frame position, the linear actuator 7 is operated. Operation of the linear actuator 7 for pivoting the second frame member 4 is similar to the operation described above. Operation of the linear actuator 7 is supported by a support linear actuator 41 in a way as it has been described for the support actuator 9 above.

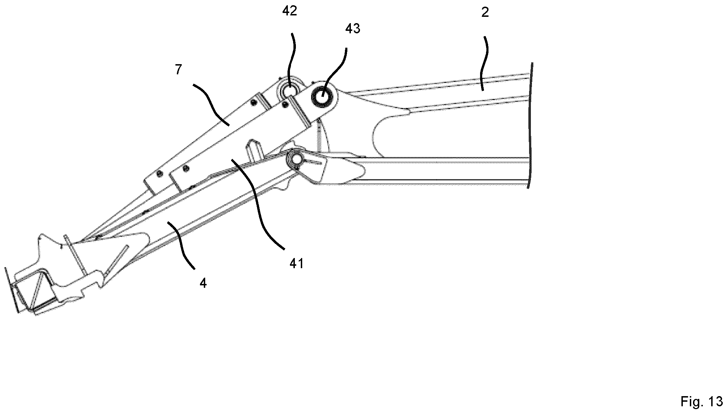

Looking from the side at the other agricultural machine 40 in a direction transversely to the driving or working direction A (see Fig. 10), an offset is provided for pivoting points 42, 43 of the linear actuator 7, and the support linear actuator 41 (see Fig. 13). On the side opposite to the pivoting points 42, 43, both the linear actuator 7 and the support linear actuator 41 are pivotably connected to the second frame member 4.

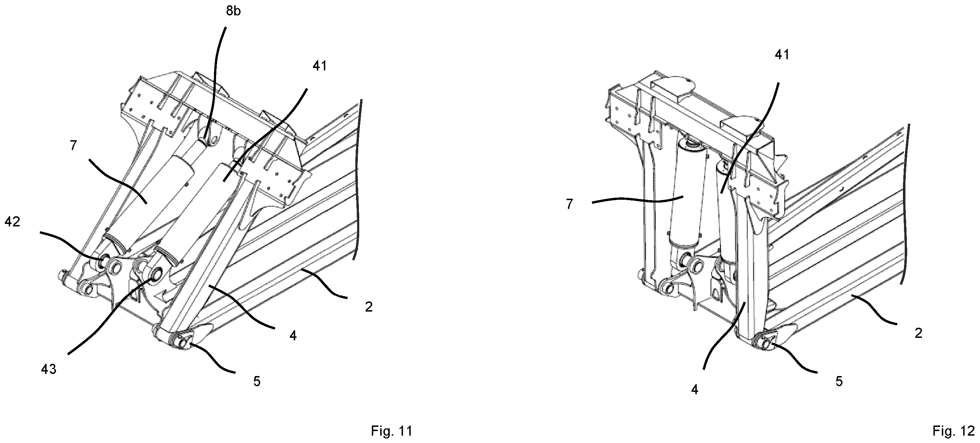

Referring to Fig. 11, the second frame member 4 is in the first frame position with respect to the first frame member 2. The linear actuator 7 is in a partially extracted start position. In an alternative embodiment (not shown), the linear actuator 7 may be provided in a fully extracted start position. Also, the support linear actuator 41 is in a start pivot position.

For moving the second frame member 4 by pivoting motion around the frame member pivot point 5 to the second frame position depicted in Fig. 12, the linear actuator 7 is operated, i.e. the linear actuator 7 is moved to an intermediate (retracted) position shown in Fig. 12, which is a fully retracted position of the linear actuator 7 in the example shown. In an alternative embodiment (not shown), the linear actuator 7 may be moved to a partially retracted position. At the same time, the linear actuator 7 is moved into an intermediate pivot position shown in Fig. 12.

Further rotational or pivoting motion of the second frame member 4 is caused by further operation of the linear actuator 7 which is moved to the (fully or partially) extracted position shown in Fig. 13. At the same time, the linear actuator 7 is pivoted from the intermediate pivot position in Fig. 12 into an end pivot position shown in Fig. 13.

Both the second frame member 4 and the linear actuator 7 are rotated or pivoted when the second frame member 4 is moved from the first frame position in Fig. 11 to the second member position in Fig. 13. The linear actuator 7 is rotated around the pivoting point 42 providing for a first pivot point in which the linear actuator 7 is pivotably connected to the first frame member 2. Further, the linear actuator 7 is also rotated around a second pivot point 8b in which the linear actuator 7 is pivotably connected to the second frame member 4.

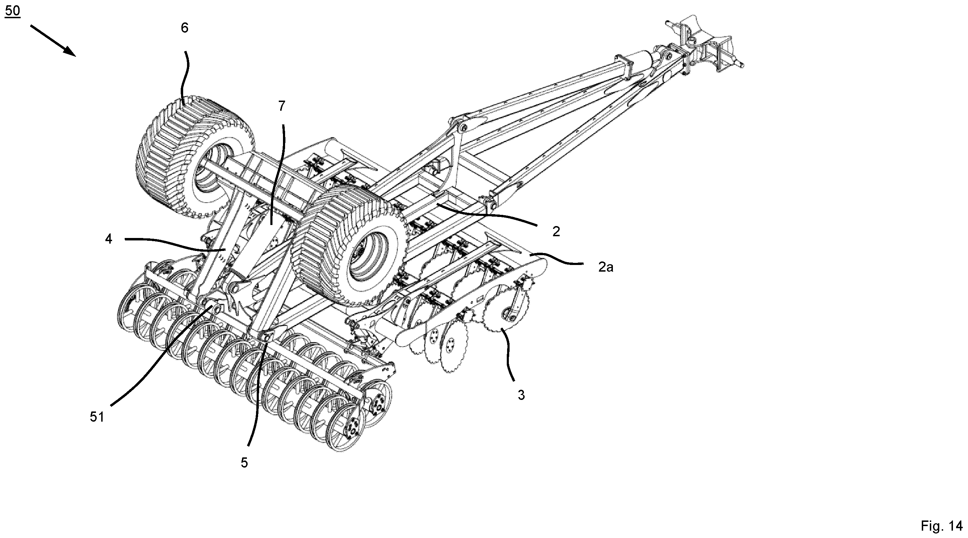

Fig. 14 shows an embodiment of a further agricultural machine 50 which, in this example, is an agricultural cultivator. In Fig. 14, the same features are assigned the same reference numerals like in Fig. 1 to 3. For supporting or assisting operation of the linear actuator 7 for pivoting the second frame member 4, a support rotary actuator 51 is provided. The support rotary actuator 51 provides the support force to the linear actuator 7 along the curve of movement 20 the linear actuator 7 as it has been described in further detail above.

The features disclosed in this specification, the figures and / or the claims may be material for the realization of various embodiments, taken in isolation or in various combinations thereof.

## Claims

1. An agricultural machine (1; 40; 50), comprising:
- a first frame member (2);
- a second frame member (4) which is, with respect to the first frame member (2), movable between a first frame position and a second frame position;
- a linear actuator (7), the linear actuator (7) being extractable and retractable for adjusting an actuator extension of the linear actuator (7), and being pivotably connected to the first frame member (2) in a first pivot point, wherein
- for moving the second frame member (4) between the first frame position and the second frame position, the linear actuator (7) is operable to move the linear actuator (7) from a start position to a intermediate position, and move the linear actuator (7) from the intermediate position to an end position, wherein the linear actuator (7) has a first actuator extension in the start position, a second actuator extension different from the first actuator extension in the intermediate position, and a third actuator extension different from the second actuator extension in the end position,
- the linear actuator (7) is in a start pivot position when the linear actuator (7) is in the start position,
- the linear actuator (7) is in an intermediate pivot position (22) when the linear actuator (7) is in the intermediate position, wherein the intermediate pivot position (22) is different from the start pivot position, and
- the linear actuator (7) is in an end pivot position when the linear actuator (7) is in the end position, wherein the end pivot position is different from both the start pivot position and the intermediate pivot position (22); and
- a support actuator (9; 41; 51) operable to apply a support force supporting a first pivoting motion of the linear actuator (7) in at least a curve section (24) of a movement curve (20) representing the first pivoting motion of the linear actuator (7) around the first pivot point (8a; 42) between the start pivot position and the end pivot position, wherein the intermediate pivot position (22) is located within the curve section (24).

2. Agricultural machine (1; 40; 50) of claim 1, wherein the curve section is extending between a pre-intermediate pivot position (25) located before the intermediate pivot position (22) and a post-intermediate pivot position (26) located behind the intermediate pivot position (22), and wherein both the pre-intermediate pivot (25) and the post-intermediate pivot position (26) are located adjacent to the intermediate pivot position (22).

3. Agricultural machine (1; 40; 50) of claim 1 or 2, further comprising an operation control device assigned to the linear actuator (7), wherein the operation control device is operable to control operation of the linear actuator (7) in a first mode of operation for extracting the linear actuator (7) and a second mode of operation for retracting the linear actuator (7), and to reverse operation of the linear actuator (7) between the first mode of operation and the second mode of operation.

4. Agricultural machine (1; 40; 50) of claim 3, further comprising a sensor device operatively connected to the operation control device and operable to detect one or more positions from the following group of positions:
- at least one of the intermediate pivot position (22), the pre-intermediate pivot position (25), the post-intermediate pivot position (26), the start pivot position, and the end pivot position of the linear actuator (7);
- at least one of the start position, the intermediate position, and the end position of the linear actuator (7); and
- at least one of the first frame position and the second frame position of the second frame member (4).

5. Agricultural machine (1; 40; 50) of at least one of the preceding claims, wherein the support actuator (9; 41; 51) is one of a support linear actuator and a support rotary actuator.

6. Agricultural machine (1; 40) of claim 5, wherein, for the support linear actuator, one of the following is provided:
(a) for moving the second frame member (4) between the first frame position and the second frame position, the linear actuator (7) is operable to retract the linear actuator (7) from an extracted start position to a retracted intermediate position, and to extract the linear actuator (7) from the retracted intermediate position to an extracted end position; and
(b) for moving the second frame member (4) between the first frame position and the second frame position, the linear actuator (7) is operable to extract the linear actuator (7) from a retracted start position to an extracted intermediate position, and to retract the linear actuator (7) from the extracted intermediate position to a retracted end position.

7. Agricultural machine (1; 40; 50) of at least one of the preceding claims, wherein the linear actuator (7) is pivotably connected to the second frame member (4) in a second pivot point (8b).

8. Agricultural machine (1; 40; 50) of at least one of the preceding claims, wherein the second frame member (4) is pivotably connected to the first frame member (2) in a frame member pivot point (5), and wherein the second frame member (4) is movable between the first frame position and the second frame position by a second pivoting motion around the frame member pivot point (5).

9. Agricultural machine (1; 40; 50) of at least one of the preceding claims, wherein the linear actuator (7), with respect to the first pivot point (8a; 42), is pivotable mono-directional between the start pivot position and the end pivot position by the first pivoting motion.

10. Agricultural machine (1; 40; 50) of at least one of the preceding claims, wherein the first frame position is a working position of the second frame member (4) and the second frame position is non-working position of the second frame member (4).

11. Agricultural machine (1; 40; 50) of at least one of the preceding claims, the agricultural machine (1; 40; 50) being selected from the following group: soil preparation machine, soil tillage machine, weeding machine, harrows, hoes, plough, seeder, sprayer, harvester, and plant cutting machine such as mower, rakes, tedder, mergers, baling machines, wrapping machines, handling machines, loaders, trailers, and harvesters.

12. Agricultural machine (1; 40; 50) of at least one of the preceding claims, wherein at least one of the linear actuator (7) and the support actuator (9; 41; 51) is selected from the following group: hydraulic actuator, electric actuator, magnetic actuator, and pneumatic actuator.

13. A method of operating an agricultural machine (1; 40; 50), comprising:
- providing an agricultural machine (1; 40; 50), having
- a first frame member (2);
- a second frame member (4) which is, with respect to the first frame member (2), movable between a first frame position and a second frame position;
- a linear actuator (7), the linear actuator (7) being extractable and retractable for adjusting an actuator extension of the linear actuator (7), and being pivotably connected to the first frame member (2) in a first pivot point (8; 42); and
- a support actuator (9; 41; 51);
- moving the second frame member (4) between the first frame position and the second frame position, comprising
- moving the linear actuator (7) from a start position to an intermediate position, and moving the linear actuator (7) from the intermediate position to an end position, wherein the linear actuator (7) has a first actuator extension in the start position, a second actuator extension different from the first actuator extension in the intermediate position, and a third actuator extension different from the second actuator extension in the end position,
- providing the linear actuator (7) in a start pivot position when the linear actuator (7) is in the start position,
- providing the linear actuator (7) in an intermediate pivot position (22) when the linear actuator (7) is in the intermediate position, wherein the intermediate pivot position (22) is different from the start pivot position, and
- providing the linear actuator (7) in an end pivot position when the linear actuator (7) is in the end position, wherein the end pivot position is different from both the start pivot position and the intermediate pivot position (22); and
- by the support actuator (9; 41; 51), applying a support force supporting a first pivoting motion of the linear actuator (7) in at least a curve section (24) of a movement curve (20) representing the first pivoting motion of the linear actuator (7) between the start pivot position and the end pivot position around the first pivot point (8a; 42), wherein the intermediate pivot position (22) is located within the curve section (24).
